Europäisches Patentamt

European Patent Office

Office européen des brevets

(19)

(11) Veröffentlichungsnummer: **0 120 476**
**A2**

(12) **EUROPÄISCHE PATENTANMELDUNG**

(21) Anmeldenummer: **84103184.2**

(22) Anmeldetag: **22.03.84**

(51) Int. Cl.³: **H 04 M 1/274**

(30) Priorität: **25.03.83 DE 3311032**

(43) Veröffentlichungstag der Anmeldung:
**03.10.84 Patentblatt 84/40**

(84) Benannte Vertragsstaaten:
**AT CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Kaufmann, Peter, Ing. (grad)**
**Lindenweg 6**
**D-8031 Gilching(DE)**

(72) Erfinder: **Noé, Werner, Dipl.-Ing.**
**Am Schlosspark 12**
**D-8035 Gauting(DE)**

(72) Erfinder: **Gilch, Gerhard, Dr.rer.pol.**
**Heinleinstrasse 12**
**D-8000 München 71(DE)**

(54) **Anordnung zum selbsttätigen Wählen von Zielnummern.**

(57) Bei einem mit einem Bildschirm (6) versehenen Bildschirm-telefon ist eine Namenstastatur (5) vorgesehen. Diese enthält mehrere Tasten, mit denen bestimmte Ziel-.nummern selbsttätig gewählt werden können. Den Tasten sind räumlich und/oder optisch vorgegebene Bereiche am Bildschirm (6) zugeordnet. In diesen Bereichen werden den jeweiligen Zielnummern zugeordnete Texte dargestellt. Beim Dienst "Fernsprechen" stellen die Zielnummern Teilnehmer-nummern eines fernen Teilnehmers dar. Beim Dienst "Bildschirmtest" stellen die Zielnummern Seitennummern von Bildschirmtextseiten dar. Dementsprechend sind die vorgegebenen Texte Namen bzw. Schlagwörter. Mittels einer weiteren Taste ist ein "Weiterblättern" möglich, so daß weitere Texte und zugehörige Zielnummern auswählbar sind.

**FIG 1**

EP 0 120 476 A2

SIEMENS AKTIENGESELLSCHAFT        Unser Zeichen

Berlin und München                VPA 83 P 1 2 0 6 E

Anordnung zum selbsttätigen Wählen von Zielnummern

Die Erfindung bezieht sich auf eine Anordnung zum selbsttätigen Wählen von Zielnummern entsprechend dem Oberbegriff des Patentanspruchs 1.

Zum Erleichtern des Wählens der Teilnehmernummer eines fernen Teilnehmers an einem Fernsprechapparat ist es bereits allgemein bekannt, im Fernsprechapparat oder in einem Zusatzgerät mehrere Teilnehmernummern zu speichern und jeweils eine dieser Teilnehmernummern durch das Betätigen einer oder mehrerer Tasten aufzurufen. Falls jeder Teilnehmernummer eine Taste zugeordnet ist, kann diese mit dem Namen des jeweiligen Teilnehmers beschriftet werden. Nach dem Betätigen der Taste wird die entsprechende Teilnehmernummer selbsttätig gewählt. Eine derartige Anordnung hat den Nachteil, daß bei einer Vielzahl von Teilnehmernummern sehr viele Tasten erforderlich sind. Häufig ist hierzu ein Beistellgerät erforderlich, das eine zusätzliche Stellfläche erfordert.

Die Beschriftung erfolgt häufig unter Verwendung von auswechselbaren Beschriftungseinlagen in den Tasten, Beschriftungsstreifen außerhalb der Tasten oder auch Tastenkappen, die durch Verwendung entsprechender Werkstoffe mit Stiften beschriftbar gemacht sind. Diese Lösungen haben den Nachteil, daß bei einer Änderung der Zuordnung die Beschriftungseinlagen oder die Beschriftungsstreifen ausgetauscht oder geändert werden müssen und die Beschriftungen auf den Tastenkappen gelöscht und wieder neu aufgebracht werden müssen. Außerdem ist der für die Beschriftung verfügbare Platz sehr beschränkt.

Der Erfindung liegt daher die Aufgabe zugrunde, eine Anordnung zum selbsttätigen Wählen einer Mehrzahl von Teilnehmern anzugeben, bei der die Zuordnung zwischen den Teilnehmern und den Tasten auf einfache Weise änderbar ist.

Erfindungsgemäß wird die Aufgabe bei der Anordnung der eingangs genannten Art durch die im kennzeichnenden Teil des Patentanspruchs 1 angegebenen Merkmale gelöst.

Die Zielnummern sind entweder Teilnehmernummern von fernen Teilnehmern, wenn die Anordnung in einem Endgerät für den Dienst "Fernsprechen" benutzt wird oder die Seitennummern von Bildschirmtextseiten, wenn die Anordnung in einem Endgerät für den Dienst "Bildschirmtext" benutzt wird. Falls das Fernsprechgerät und das Bildschirmtextgerät in einem Endgerät integriert sind, werden als Zielnummern selbsttätig entweder die Teilnehmernummern oder die Seitennummern dargestellt, je nach dem in welchem Funktionszustand sich das Endgerät befindet. Dementsprechend sind auch die von der Anordnung abgegebenen Signale entweder Impulswahl- oder Mehrfrequenzwahlsignale oder Daten, die die jeweiligen Bildschirmtextseiten aufrufen. Die Zielnummern können auch Kennummern von an sich bekannten Teilnehmerdiensten in speicherprogrammierten Vermittlungsanlagen darstellen.

Die in dem Datenspeicher gespeicherten Zielnummern und die an der Anzeigeeinheit darstellbaren Texte sind mittels einer Zifferntastatur und einer alphabetischen Tastatur eingebbar. Es ist auch möglich, die Zielnummern

0120476

und die zugehörigen Texte mittels einer Steckkarte einzugeben. Weiterhin ist es möglich, die Zielnummern und die zugehörigen Texte über die Fernleitung in den Datenspeicher einzuspeichern.

Die Zuordnung der für die Darstellung der Texte vorgesehenen Bereiche an der Anzeigeeinheit und der jeweiligen Taste erfolgt beispielsweise dadurch, daß die Bereiche an der untersten Zeile eines Bildschirms dargestellt werden und unmittelbar benachbart an einer Tastatur die entsprechenden Tasten angeordnet sind. Die Bereiche und die Tasten werden zweckmäßigerweise durch grafische Mittel·optisch miteinander "verbunden". Bei abgesetzten Tastaturen wird die Zuordnung vorteilhaft durch eine Gruppierung der Tasten in Dreiergruppen erreicht, die wahrnehmungspsychologisch eine besonders gute Orientierung ermöglicht, wenn sich dieselbe Gruppierung in den Bereichen am Bildschirm wiederfindet. Die Tasten selbst sind nicht beschriftbar, können aber zur besseren Orientierung eine Laufnummer enthalten.

Als alphabetische Tastatur wird insbesondere eine Einfingerbuchstabentastatur verwendet, mittels der die in den Bereichen darzustellenden Texte in den Datenspeicher eingegeben werden. Dieser Datenspeicher kann sowohl mit üblichen Schriftzeichen, wie Buchstaben oder Ziffern beschrieben werden, wie auch mit eigens definierten Sonderzeichen oder auch Bildzeichen bzw. Symbolen. Die Texte können überschrieben und gelöscht werden.

Falls nur eine geringe Anzahl von Tasten vorgesehen ist, ist es zweckmäßig, eine weitere Taste vorzusehen, nach deren Betätigung die in den Bereichen dargestellten Texte und damit die Bedeutung der Tasten fortgeschaltet wird.

Auf diese Weise ist ein "Blättern" möglich, so daß mit einer geringen Anzahl von Tasten eine Vielzahl von Zielnummern ausgewählt werden kann. Das Blättern kann auch selbsttätig mit einer festgelegten oder einer wählbaren Folgefrequenz erfolgen, so daß eine Laufanzeige der Texte erfolgt. Die Betätigung einer Taste kann an der Anzeigeeinheit quittiert werden, indem der der jeweiligen Taste zugeordnete Text an der Anzeigeeinheit optisch besonders gekennzeichnet wird, beispielsweise invertiert dargestellt wird.

Im folgenden wird ein Ausführungsbeispiel der Anordnung gemäß der Erfindung anhand von Zeichnungen näher erläutert. Es zeigen

Fig. 1 eine perspektivische Ansicht eines mit der Anordnung versehenen Bildschirmtelefons,

Fig. 2 eine Darstellung einer Tastatur und eines Teils einer Anzeigeeinheit des Bildschirmtelefons,

Fig. 3 ein Blockschaltbild des Bildschirmtelefons.

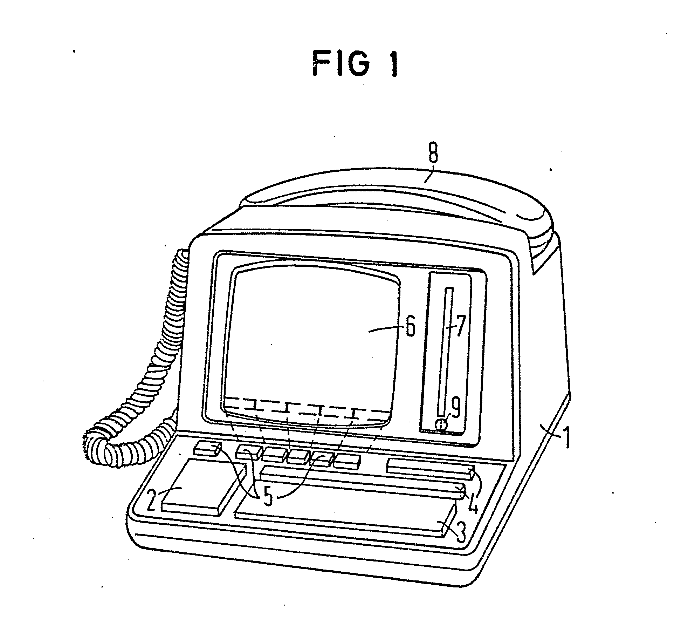

Das in Fig. 1 dargestellte Bildschirmtelefon besteht aus einem Gehäuse 1, dessen vorderer Teil eine Tastatur aufweist. Die Tastatur enthält eine Zifferntastatur 2, die gleichzeitig als Wahltastatur dient, eine alphabetische Tastatur 3, eine Funktionstastatur 4 und eine Namenstastatur 5. Weiterhin enthält das Bildschirmtelefon eine Anzeigeeinheit 6, die beispielsweise als Bildschirm einer Kathodenstrahlröhre ausgebildet ist. Neben dem Bildschirm ist eine Aufnahme 7 für eine Steckkarte angeordnet. Ein Handapparat 8 mit einer Sprech- und einer Hörkapsel liegt quer auf dem Gehäuse 1 auf. Zusätzlich ist das Bildschirm-

0120476

telefon mit einem Schlüsselschalter 9 versehen. Das Bildschirmtelefon ist eine mehrfunktionale integrierte Teilnehmereinrichtung, die für den Dienst "Fernsprechen" und den Dienst "Bildschirmtext" vorgesehen ist. Zusätzlich können noch lokale Komfortfunktionen ausgeführt werden. Das Bildschirmtelefon ist an ein öffentliches oder an ein privates Fernsprechnetz anschließbar. Es ist wahlweise für eine Impulswahl oder eine Mehrfrequenzwahl vorgesehen.

Wenn sich das Bildschirmtelefon im Funktionszustand "Fernsprechen" befindet, erfolgt die Wahl eines fernen Teilnehmers bei abgehobenem Handapparat 8 durch Betätigung der entsprechenden Zifferntasten der Wahltastatur 2. Eine Verbindung zu einem fernen Teilnehmer kann auch bei aufliegendem Handapparat aufgebaut werden. Die Hörtöne werden dann über einen Lautsprecher übertragen. Sobald sich der gerufene Teilnehmer meldet, muß zum Sprechen der Handapparat 8 abgenommen werden.

Es ist auch möglich, mit dem Bildschirmtelefon nach dem Betätigen einer Taste der Namenstastatur 5 selbsttätig einen fernen Teilnehmer zu wählen. Zu diesem Zweck enthält das Bildschirmtelefon einen Datenspeicher, in dem als Zielnummern Teilnehmernummern sowie zugehörige Texte, vorzugsweise Namen der Teilnehmer speicherbar sind. Die Namen sind an der Anzeigeeinheit 6 beispielsweise an der untersten Zeile derart dargestellt, daß eine räumliche und/oder grafische Zuordnung zwischen den in vorgegebenen Bereichen dargestellten Namen und entsprechenden Tasten der Namenstastatur 5 möglich ist. Beispielsweise sind fünf Tasten fünf Bereichen an der Anzeigeeinheit 6 zugeordnet. Beim Betätigen einer dieser Tasten wird der durch den entsprechenden Text gekennzeichnete Teilnehmer selbsttätig gewählt. Mit einer weiteren Taste der Namenstastatur 5 ist es möglich, die an der Anzeigeeinheit 6 dargestellten Namen "weiterzublättern". Nach jedem Betätigen
dieser weiteren Taste werden jeweils fünf neue Namen an
der Anzeigeeinheit 6 dargestellt und beim Betätigen einer
der Tasten wird die entsprechende Teilnehmernummer gewählt.

Wenn sich das Bildschirmtelefon im Funktionszustand "Bildschirmtext" befindet, werden selbsttätig anstelle der Namen in den vorgegebenen Bereichen Texte dargestellt, die
häufig benutzten Seitennummern von Bildschirmtextseiten
zugeordnet sind. Beim Betätigen der entsprechenden Taste
werden dann diese Seiten selbsttätig aufgerufen. Auch
hier ist es möglich mit Hilfe der weiteren Taste "weiterzublättern".

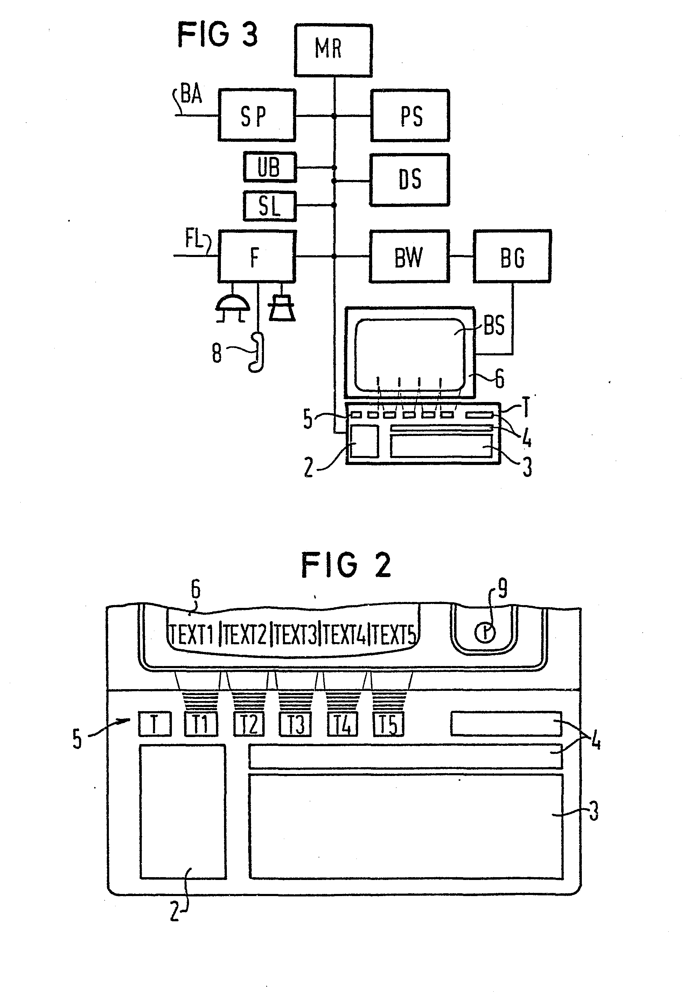

Weitere Einzelheiten werden im folgenden zusammen mit der
in Fig. 2 dargestellten Draufsicht auf die Tastatur und
mit dem in Fig. 3 dargestellten Blockschaltbild beschrieben.

Die in Fig. 2 dargestellte Tastatur enthält wieder die
Zifferntastatur 2, die gleichzeitig als Wahltastatur ausgebildet ist, die alphabetische Tastatur 3, die Funktionstastatur 4 und die Namenstastatur 5. An der untersten Zeile der Anzeigeeinheit 6 sind in durch senkrechte Striche
getrennten vorgegebenen Bereichen fünf Texte dargestellt,
die entweder Namen von fernen Teilnehmer oder Schlagwörter von Bildschirmtextseiten darstellen. Zwischen den Tasten T1 bis T5 und den vorgegebenen Bereichen an der Anzeigeeinheit 6 ist durch keilförmig angeordnete Striche eine
optische Verbindung hergestellt, so daß die Texte jeweils
den Tasten T1 bis T5 eindeutig zugeordnet werden können.
Mit der weiteren Taste T ist es möglich, die Texte "weiterzublättern".

Das in Fig. 3 dargestellte Blockschaltbild zeigt den Zusammenhang zwischen den verschiedenen Einrichtungen des Bildschirmtelefons. An den Daten, Adreß- und Steuerbus B eines Mikrorechners MR ist ein Programmspeicher PS, ein Bildwiederholspeicher BW, ein die Zielnummern und die zugehörigen Texte enthaltender Datenspeicher DS, eine Fernsprechschaltung F, die Tastatur TA und ein Serien-Parallel-Umsetzer SP angeschlossen. An dem Bildwiederholspeicher BW ist ein Bildgenerator BG zum Darstellen von Zeichen und grafischen Mustern am Bildschirm BS der Anzeigeeinheit 6 angeschlossen. Die Tastatur TA enthält die Ziffern bzw. Wahltastatur 2, die alphabetische Tastatur 3, die Funktionstastatur 4 und die Namenstastatur 5. An der Fernsprechschaltung F ist die Fernleitung FL angeschlossen. Weiterhin sind dort der Handapparat 8, ein akustischer Signalgeber und gegebenenfalls ein Lautsprecher für das Freisprechen angeschlossen. Der Serien-Parallel-Umsetzer SP ist über eine Fernleitung BA mit einem Bildschirmtextmodem verbunden. An dem Bus B können zusätzlich noch ein Steckkartenleser SK und ein Uhrenbaustein UB angeschlossen sein, der die Uhrzeit, die Fernsprech- oder Bildschirmtextgebühren oder zu stoppende Zeitdauern anzeigen kann und der auch für Terminrufe zu vorgegebenen Zeitpunkten eingesetzt werden kann.

Wenn sich das Bildschirmtelefon im Funktionszustand Fernsprechen befindet, kann unter Verwendung der Wahltastatur 2 in an sich bekannter Weise bei aufgelegtem oder abgenommendem Handapparat gewählt werden. Falls die Wahl unter Verwendung der Namenstastatur 5 erfolgt und sich der Name des gewünschten Teilnehmers unter den fünf am Bildschirm BS angezeigten Namen befindet, wird die entsprechende Taste der Tasten T1 bis T5 betätigt, so daß dann selbsttätig unter Verwendung einer aus dem Mikrorechner MR und dem Programmspeicher PS gebildeten Steuereinheit und der Fernsprechschaltung F die entsprechende Teilnehmernummer gewählt wird. Falls sich der gewünschte Name nicht unter den fünf angezeigten Namen befindet, wird die weitere Taste T solange betätigt, bis der entsprechende Name am Bildschirm BS erscheint. Dann wird die zugeordnete Taste betätigt, um die entsprechende Teilnehmernummer zu wählen.

Wenn sich das Bildschirmtelefon im Funktionszustand "Bildschirmtext" befindet und der Zugriff zu einer bestimmten Seite gewünscht wird, ist es einerseits möglich, in bekannter Weise diese Seite unter Verwendung der Wahltastatur 2 aufzurufen. Häufig benutzte Seiten werden zweckmäßigerweise mittels der Namenstastatur 5 aufgerufen. In diesem Fall werden als Texte beispielsweise Schlagwörter an dem Bildschirm BS dargestellt und nach dem Betätigen einer entsprechenden Taste der Tasten T1 bis T5 wird die zugeordnete Bildschirmtextseite selbsttätig aufgerufen. Zu diesem Zweck wird die Zielnummer aus dem Datenspeicher DS ausgelesen und zum Serien-Parallel-Umsetzer SP übertragen, der entsprechende Datensignale erzeugt und über die Fernleitung BA zur Bildschirmtextzentrale überträgt. Auch hier ist es möglich, mittels der weiteren Taste T "weiterzublättern", falls das gewünschte Schlagwort sich nicht unter den jeweils fünf am Bildschirm BS dargestellten Schlagwörtern befindet.

Die Eingabe der Texte und der Zielnummern erfolgt unter Verwendung der Zifferntastatur 2 und der alphabetischen Tastatur 3. Hierzu wird an der Funktionstastatur 4 eine entsprechende Taste betätigt und anschließend mit dem Einspeichern begonnen. Es ist auch möglich, die Eingabe mittels einer Steckkarte vorzunehmen, die in die Ausnehmung 7 hineingeschoben wird und mittels des Steckkartenlesers SL gelesen wird. Weiterhin ist es möglich, die Teilnehmernummern und die Texte über die Fernleitung FL oder die Fernleitung BA in den Datenspeicher DS einzuspeichern.

Es ist möglich, das Weiterblättern jeweils nach dem Betätigen der weiteren Taste T durchzuführen oder selbsttätig mit einer festgelegten oder einer wählbaren Folgefrequenz durchzuführen. Das Weiterblättern wird in diesem Fall nach dem Betätigen der Taste T begonnen und nach einem weiteren Betätigen der Taste T beendet.

Um die Betätigung einer der Tasten T1 bis T5 quittieren zu können, ist es vorteilhaft, wenn nach dem Betätigen einer Taste der Text in dem zugeordneten Bereich optisch besonders gekennzeichnet wird, beispielsweise invertiert dargestellt wird.

10 Patentansprüche
3 Figuren

## Patentansprüche

1. Anordnung zum selbsttätigen Wählen von Zielnummern in einem an einer Fernleitung angeschlossenen Endgerät, bei dem nach dem Betätigen mindestens einer Taste die entsprechende Zielnummer in codierte Signale umgesetzt wird und über die Fernleitung übertragen wird, g e k e n n - z e i c h n e t   d u r c h   einen Datenspeicher (DS), in dem eine Mehrzahl von Zielnummern und zugehörige Texte speicherbar sind, durch eine Anzeigeeinheit (6), an der die den gespeicherten Zielnummern zugeordneten Texte in vorgegebenen Bereichen darstellbar sind, durch eine Mehrzahl von Tasten (T1 bis T6), die jeweils einem der vorgegebenen Bereiche räumlich und/oder optisch zugeordnet sind und durch eine Steuereinheit (MR, PS), die nach dem Betätigen einer der Tasten (T1 bis T5) die dieser Taste und dem zugeordneten Text entsprechende Zielnummer in die codierten Signale umsetzt und an die Fernleitung (FL) abgibt.

2. Anordnung nach Anspruch 1, d a d u r c h   g e - k e n n z e i c h n e t , daß als Zielnummern Teilnehmernummern von fernen Teilnehmern beim Dienst "Fernsprechen" vorgesehen sind und daß die codierten Signale als Impulswahlsignale oder Mehrfrequenzwahlsignale ausgebildet sind.

3. Anordnung nach Anspruch 1 oder Anspruch 2, d a - d u r c h   g e k e n n z e i c h n e t , daß als Zielnummern Seitennummern für den Abruf bestimmter Bildschirmtextseiten beim Dienst "Bildschirmtext" vorgesehen sind und daß die codierten Signale als Datensignale ausgebildet sind.

0120476

4. Anordnung nach einem der Ansprüche 1 bis 3, d a - d u r c h   g e k e n n z e i c h n e t , daß die in dem Datenspeicher (DS) gespeicherten Zielnummern und die zugehörigen Texte mittels einer Zifferntastatur (2) und einer alphabetischen Tastatur (3) eingebbar sind.

5. Anordnung nach einem der Ansprüche 1 bis 3, d a - d u r c h   g e k e n n z e i c h n e t , daß die in dem Datenspeicher gespeicherten Zielnummern und zugehörigen Texte mittels einer Steckkarte eingebbar sind.

6. Anordnung nach einem der Ansprüche 1 bis 3, d a - d u r c h   g e k e n n z e i c h n e t ,  daß die in dem Datenspeicher (DS) gespeicherten Zielnummern und zugehörigen Texte über die Fernleitung (FL, BA) eingebbar sind.

7. Anordnung nach einem der Ansprüche 1 bis 6, d a - d u r c h   g e k e n n z e i c h n e t ,  daß als Anzeigeeinheit (6) ein Bildschirm (BS) vorgesehen ist.

8. Anordnung nach Anspruch 7, d a d u r c h   g e - k e n n z e i c h n e t ,   daß die vorgegebenen Bereiche in der untersten Zeile des Bildschirms (BS) angeordnet sind und daß die Tasten (T1 bis T5) in der Nähe der vorgegebenen Bereiche an einer vor dem Bildschirm (BS) vorgesehenen Tastatur (T) angeordnet sind.

9. Anordnung nach einem der Ansprüche 1 bis 8, d a - d u r c h   g e k e n n z e i c h n e t ,  daß eine weitere Taste (T) vorgesehen ist, nach deren Betätigung den Tasten (T1 bis T5) weitere Zielnummern und Texte zugeordnet werden.

0120476

10. Anordnung nach einem der Ansprüche 1 bis 9, d a - d u r c h   g e k e n n z e i c h n e t ,   daß nach dem Betätigen einer der Tasten (T1 bis T5) der zugeordnete Text an der Anzeigeeinheit (6) optisch besonders gekennzeichnet wird.

# FIG 1

**FIG 3**

**FIG 2**